(19)

Europäisches Patentamt

European Patent Office

Office européen des brevets

(11) **EP 4 488 059 A1**

(12) **EUROPEAN PATENT APPLICATION**

(43) Date of publication:
08.01.2025 Bulletin 2025/02

(21) Application number: 23306146.4

(22) Date of filing: 06.07.2023

(51) International Patent Classification (IPC):
**B32B 7/12** (2006.01)    **B32B 27/08** (2006.01)
**B32B 27/36** (2006.01)    **C08L 3/02** (2006.01)

(52) Cooperative Patent Classification (CPC):
**B32B 7/12; B32B 27/08; B32B 27/36; C08L 3/02;**
B32B 2250/03; B32B 2250/40; B32B 2270/00;
B32B 2307/54; B32B 2307/546; B32B 2307/7163;
B32B 2307/7244; B32B 2307/7246;
B32B 2307/7265; B32B 2307/7376; B32B 2439/80

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Sartorius Stedim FMT**
**13400 Aubagne (FR)**
• **Université de Strasbourg**
**67000 Strasbourg (FR)**
• **Centre National de la Recherche Scientifique**
**75016 Paris (FR)**

(72) Inventors:
• **BARBAROUX, Magali**
**13112 LA DESTROUSSE (FR)**
• **REIF, Oscar Werner**
**30173 HANNOVER (DE)**
• **AVEROUS, Luc**
**67370 WIWERSHEIM (FR)**
• **MORINVAL, Alexis**
**67000 STRASBOURG (FR)**

(74) Representative: **Plasseraud IP**
**104 Rue de Richelieu**
**CS92104**
**75080 Paris Cedex 02 (FR)**

(54) **BIODEGRADABLE MULTILAYERED FILM COMPRISING OUTER LAYERS AND A CORE LAYER FOR THE WALL OF A SINGLE-USE BAG**

(57)    The present disclosure concerns a biodegradable multilayered film comprising stacked to one another in the following order:
a) a first outer layer comprising a first polymer selected from the group consisting of polybutylene adipate terephthalate (PBAT), poly butylene succinate (PBS), poly butylene succinate adipate (PBSA), and mixtures thereof,
b) a core layer comprising a blend of a thermoplastic starch (TPS) and polybutylene terephthalate (PBAT),

c) a second outer layer comprising a second polymer selected from the group consisting of polybutylene adipate terephthalate (PBAT), poly butylene succinate (PBS), poly butylene succinate adipate (PBSA), and mixtures thereof.

The present disclosure also concerns a single use-bag, a bioreactor, and container suitable for mixing, packaging, storing or transporting biopharmaceuticals, wherein the single use-bag, bioreactor, and container comprise the biodegradable multilayered film.

EP 4 488 059 A1

**Description**

Technical field

The present disclosure relates to a biodegradable multilayered film which can be used to manufacture a single-use bag usable as a bioreactor or in a bioprocess or to manufacture a container for mixing, packaging, storage or transportation, in particular for preparing, storing or transporting biopharmaceutical fluids, as well as a process for manufacturing such a multilayered film.

The present disclosure also relates to a single-use bag manufactured from the biodegradable multilayered film and its process of manufacturing.

Background

Biopharmaceuticals are pharmaceuticals produced in biotechnological processes using molecular biology methods. Unlike synthetic drugs which are products of chemical processes, biopharmaceuticals are produced in living cells. Biopharmaceuticals, such as biologics, include for instance vaccines, therapeutic proteins, blood and blood components, tissues, etc. In contrast to small molecule chemically synthesized drugs, which have a well-defined structure, biologics are derived from living material (human, animal, microorganism, or plant) and are vastly larger and more complex in structure. Currently, most of commercially available biopharmaceuticals contain recombinant proteins as their active pharmaceutical ingredient. These proteins are typically produced in prokaryotic systems, mainly *Escherichia coli,* or eukaryotic systems based on fungi (*Saccharomyces cerevisiae* and *Pichia pastoris*), mammalian cells, or insect cell lines.

Single-use or disposable technologies, in particular single-use bags, are widely used in the manufacturing of biopharmaceuticals because they avoid the cleaning of reusable containers or other equipment that come into contact with the product and thus prevent the cross-contamination in multiproduct manufacturing plants.

Single-use bags can be in the form of 2D or 3D flexible bags (D meaning dimensions). A 2D bag is made by sealing two sheets together, while a 3D bag is generally made by sealing at least three sheets together. The volume of single-use bags may reach 3,000 liters, and even more. 2D and 3D single-use bages are for instance marketed by the company Sartorius under the trademarks FLEXEL® and FLEXSAFE®. 2D and 3D single-use bags can be used in a variety of bioreactors:

- Stirred tank bioreactors, wherein a 3D bag is mounted within a cylindrical frame to hold the bag and a top driven impeller is placed inside the bag for mixing and agitating the biopharmaceutical fluid contained in the bag.
- Rocking motion or wave-mixing bioreactors, wherein a 2D bag is mounted on a platform that can be rocked to provide agitation and gas transfer.
- Orbitally shaken bioreactors, wherein a 3D bag is placed on table that moves circularly and horizontally, thereby exerting an orbital movement of the fluid inside the bag.

The wall of a single-use bag may be composed of a multilayered film comprising a core layer sandwiched between two outer layers. The outer layers may be in direct contact with the core layer. Alternatively, tie layers may be arranged in between the core layer and the outer layers.

If the bag is to be filled with a biopharmaceutical, the outer layer which gets contact with the biopharmaceutical should be made from a material that, when contacting this biopharmaceutical, does not cause degradation of the biopharmaceutical product. Furthermore, it must be sealable on itself. For that purpose, the material is generally selected from polyolefins, such as polyethylene.

The core layer provides a barrier to the passage of gases such as oxygen and carbon dioxide. The core layer is typically made from ethylene vinyl alcohol (EVOH).

The outer layer which is in contact with the external environment contributes to the mechanical strength of the bag wall. For that purpose, it must be sufficiently flexible to withstand high mechanical stress. But it shall not be too stretchable in order to prevent deformation of the bag when it is filled with a fluid especially of large volumes.

In the bioreactor field, as we described previously, various types of bioreactors are known. They mainly differ by their mode of mixing and stirring respectively, which may involve e.g. a swinging movement (rocking motion), an orbital movement or an axial movement. Mechanical stresses may hence vary significantly from one system to another. With regard to the field of transportation of substantial volumes of liquid, mechanical stresses may also be very high. In both fields, a film which is not capable of withstanding these mechanical stresses may result in breakage of the film and leakage of the product to the outside of the bag.

Therefore, films used for the manufacture of 2D or 3D bags must be able to withstand various mechanical stresses to be suitable for a wide range of applications, such as for bioreactors regardless of the mode of stirring, or for storing or transporting a fluid, or for mixing fluids or fluids and powders. The bags must also be suitable for small or large volumes.

Moreover, in the biopharmaceutical field, the bags must be sterilized before use. Sterilization is generally performed by gamma or X-ray irradiation. Therefore, the materials used in the films composing the bag have to withstand gamma or X-ray radiation without degrading the physical properties of the film.

Conventional bags are made from polymers such as polyolefins (e.g. polyethylene, polypropylene) or copolymers comprising ethylene units and, for example, acrylic acid or vinyl alcohol. These polymers or copolymers are derived from fossil fuels, which are non-renewable and non-sustainable raw materials. In addition, bags made from said raw materials are not compostable and biodegradable. Moreover, since the bags are used to process, store or transport biopharmaceutical fluids which are very sensitive to contamination, the possibility of reuse of the bags is rather low. Most bags are thus used only once, i.e. they are single-use bags. Thus, the vast majority of bags end up in landfills or incinerators. Moreover, the multilayered film of conventional bags may comprise compounds which raise concerns due to the risk of migration into a biopharmaceutical fluid.

Therefore, there is a need for a multilayered film suitable for manufacturing a 2D or 3D bag which is biodegradable and which withstands the mechanical stress 2D and 3D bags are subjected to during use as bioreactors, as mixing containers, as packaging containers, as storage containers or as transport containers. The multilayered film is also expected to have no or or limited impact on the cellular growth of a culture medium after the multilayered film has been sterilized by gamma or X-ray irradiation. The film shall not release significant amounts of degradation compounds which interfere for example with cellular growth following gamma or X-ray irradiation. Also, the bio-based carbon content of the biodegradable multilayered film shall be at least 20%.

Summary of the invention

Conventional biobased and/or biodegradable polymer films suffer from limited mechanical and barrier properties and are therefore not suitable for bioprocess, mixing, packaging, storage or transport applications in 2D or 3D bags.

The multilayered film of the present disclosure addresses these limitations and is therefore suitable for packaging biopharmaceuticals and bioprocesses applications.

Following extensive testing, the applicant of the present application has found that a multilayered film based on thermoplastic starch and certain biobased polyesters is biodegradable and meets the requirements of a single-use bioreactor or bioprocess bag (robustness, flexibility, seal strength, non-leachable compounds), and also the requirements of mixing, packaging, storage or transport containers.

In one aspect, the present disclosure provides a biodegradable multilayered film comprising stacked to one another in the following order:

a) a first outer layer comprising a first polymer selected from the group consisting of polybutylene adipate terephthalate (PBAT), poly butylene succinate (PBS), poly butylene succinate adipate (PBSA), and mixtures thereof,
b) a core layer comprising a blend of a thermoplastic starch (TPS) and polybutylene terephthalate (PBAT),
c) a second outer layer comprising a second polymer selected from the group consisting of polybutylene adipate terephthalate (PBAT), poly butylene succinate (PBS), poly butylene succinate adipate (PBSA), and mixtures thereof.

In one embodiment, the first outer layer and the core layer are in direct contact, and the second outer layer and the core layer are in direct contact.

In one embodiment, the multilayered film further comprises one or more tie layers between the first outer layer and the core layer, and between the second outer layer and the core layer.

The one or more tie layers may comprise a blend of a thermoplastic starch (TPS) and a polymer selected from the group consisting of polybutylene adipate terephthalate (PBAT), poly butylene succinate (PBS), poly butylene succinate adipate (PBSA), and mixtures thereof.

In one aspect, the present disclosure provides a process for manufacturing the biodegradable multilayered film according to any one of claims 1 to 16, comprising the following steps:

- introducing and melting the blend of a thermoplastic starch (TPS) and polybutylene terephthalate (PBAT) into a first extruder to form a core layer stream;
- introducing and melting the first polymer into a second extruder to form a first outer layer stream;
- introducing and melting the second polymer into a third extruder to form a second outer layer stream or alternatively, if first and second polymer are identical, connecting the second extruder with a feedblock to form a first outer layer stream and a second outer layer stream;
- introducing the core layer stream, first outer layer stream and second outer layer stream into a feedblock to form a 3-layered melt stream;
- introducing the 3-layered melt stream into a die to form a multilayered film.

In another aspect, the present disclosure provides a single-use bag whose wall comprises the multilayered film of the present disclosure.

In another aspect, the present disclosure provides a bioreactor comprising the single-use bag of the present disclosure.

In another aspect, the present disclosure provides a container suitable for mixing, packaging, storing or transporting biopharmaceuticals comprising the single-use bag of the present disclosure.

The multilayered film of the present disclosure is advantageous in that it presents the mechanical properties requisite for a wide range of applications. The multilayered film is biodegradable and biobased. Furthermore it has no or limited impact on the cellular growth after sterilization by gamma irradiation. It is therefore particularly suitable for 2D or 3D bags used for preparing, storing or transporting a biopharmaceutical fluid, such as a cellular medium. The multilayered films of the present disclosure are in particular suitable for producing bags used as bioreactors or as mixing, packaging, storage or transport containers.

It is herein disclosed the following items.

(1) A biodegradable multilayered film comprising stacked to one another in the following order:

a) a first outer layer comprising a first polymer selected from the group consisting of polybutylene adipate terephthalate (PBAT), poly butylene succinate (PBS), poly butylene succinate adipate (PBSA), and mixtures thereof,

b) a core layer comprising a blend of a thermoplastic starch (TPS) and polybutylene terephthalate (PBAT),

c) a second outer layer comprising a second polymer selected from the group consisting of polybutylene adipate terephthalate (PBAT), poly butylene succinate (PBS), poly butylene succinate adipate (PBSA), and mixtures thereof.

(2) The biodegradable multilayered film according to (1), wherein the first outer layer and the core layer are in direct contact, and the second outer layer and the core layer are in direct contact.

(3) The biodegradable multilayered film according to (1), wherein the multilayer film further comprises one or more tie layers between the first outer layer and the core layer, and between the second outer layer and the core layer.

(3a). The biodegradable multilayered film according to (3), wherein the one or more tie layers comprise a blend of a thermoplastic starch (TPS) and a polymer selected from the group consisting of polybutylene adipate terephthalate (PBAT), poly butylene succinate (PBS), poly butylene succinate adipate (PBSA), and mixtures thereof.

(4). The biodegradable multilayered film according to any one of (1) to (3a), wherein the blend of a thermoplastic starch (TPS) and polybutylene terephthalate (PBAT) of the core layer comprises the TPS and PBAT in a weight ratio of from 60:40 to 40:60, preferably from 55: 45 to 45: 55, more preferably 50:50.

(5). The biodegradable multilayered film according to any one of (3a) to (4), wherein the blend of a thermoplastic starch (TPS) and a polymer selected from the group consisting of polybutylene adipate terephthalate (PBAT), poly butylene succinate (PBS), poly butylene succinate adipate (PBSA), and mixtures thereof, of the one more tie layers, comprises TPS and the polymer in a weight ratio of from 60:40 to 20:80, more preferably from 45:55 to 40:60.

(6). The biodegradable multilayered film according to (5), wherein the polymer of the one more tie layers is PBAT.

(7). The biodegradable multilayered film according to any one of (1) to (6), wherein the thermoplastic starch (TPS) comprises a plasticizer in an amount of 15 to 45% by weight, preferably 22 to 35%, more preferably 25 to 35 %by weight based on the weight of the thermoplastic starch.

(8). The biodegradable multilayered film according to (7), wherein the plasticizer is selected from the group consisting of polyols or amides and their mixtures, and water.

(9). The biodegradable multilayered film according to (7) or (8), wherein the plasticizer is selected from the group consisting of glycerol, sorbitol, ethylene glycol, urea, formamide and their mixtures, and water; preferably glycerol and water.

(10). The biodegradable multilayered film according to any one of (1) to (9), wherein the thermoplastic starch (TPS) comprises a starch selected from the group consisting of corn starch, tapioca starch, cassava starch, wheat starch, native wheat starch, potato starch, rice starch, sorghum starch, seaweed starch and their mixtures, preferably native wheat starch.

(11). The biodegradable multilayered film according to any one of (1) to (10), wherein the first outer layer and/or the second outer layer comprises polybutylene adipate terephthalate (PBAT).

(12). The biodegradable multilayered film according to (6) or (11), wherein the polybutylene adipate terephthalate (PBAT) comprises from 55 to 45 mol%, preferably from 53 to 47 mol% of butylene adipate and from 45 to 55 mol%, preferably from 47 to 53 mol% butylene terephthalate.

(13). The biodegradable multilayered film according to (6) or (11) or (12), wherein the polybutylene adipate terephthalate (PBAT) has a melting point measured by DSC (ISO) following ASTM E793-06 of from 105 to 125 degrees Celsius, preferably from 110 to 120 degrees Celsius.

(14). The biodegradable multilayered film according to any one of (6) or (11) to (13), wherein the polybutylene adipate terephthalate (PBAT) has a melt volume rate (measured per ISO 1133 and 190 degrees Celsius and 2.16 kg) of from 2.0 to 5.0 ml/ 10 min, preferably from 2.5 to 4.5 ml/ 10 min.

(15.) The biodegradable multilayered film according to one any of claims (6) or (11) to (14), wherein the polybutylene adipate terephthalate (PBAT) has a melt flow index (measured per ISO 1133 and 190 degrees Celsius and 2.16 kg) of from 2 to 6 g/ 10 min, preferably from 2.7 to 4.9 g/10 min.

(16.) The biodegradable multilayered film according to any one of (6) or (11) to (15), wherein the polybutylene adipate terephthalate (PBAT) has a number average molecular weight of from 10 to 70, preferably from 20 to 60, more preferably from 30 to 50 kg/mol measured by size exclusion chromatography.

(17). The biodegradable multilayered film according to any one of (6) or (11) to (16), wherein the polybutylene adipate terephthalate (PBAT) has a dispersity of from 1.5 to 2.5, preferably from 1.6 to 2.3, more preferably from 1.8 to 2.2 as measured by size exclusion chromatography.

(18). The biodegradable process according to any one of (1) to (17), wherein the polybutylene adipate terephthalate (PBAT) extruded into a monolayer film has an ultimate tensile strength in machine direction (MD) of 14 to 20 MPa and in cross direction (CD) of 12 to 15 MPa.

(19). The biodegradable multilayered film according to any one of (1) to (18), wherein the polybutylene adipate terephthalate (PBAT) extruded into a monolayer film has an elongation at break in machine direction (MD) of 350 to 800 % and in cross direction (CD) of 500 to 700 %.

(20). The biodegradable multilayered film according to any one of (1) to (19), wherein the core layer further comprises a compatibilizer.

(21). The biodegradable multilayered film according to (20), wherein the compatibilizer is selected from the group consisting of a maleic anhydride grafted polyester, a polyvinylacetate, and a co-polymer comprising styrene monomers and epoxide functionalised (meth)acrylate or (meth)acrylic acid monomers.

(22). The biodegradable multilayered film according to (21), wherein the compatibilizer is a co-polymer comprising styrene monomers and epoxide functionalised (meth)acrylate or (meth)acrylic acid monomers.

(23). The biodegradable multilayered film according to any one of (20) to (22), wherein the compatibilizer is comprised in amounts of from 0.05 to 0.7 phr, from 0.1 to 0.6, or 0.2 to 0.5 phr, preferably from 0.1 to 0.3 phr, wherein parts per hundred is based on the blend of TPS and PBAT.

(24). The biodegradable multilayered film according to any one of (1) to (23), wherein the biodegradable multilayered film is devoid of additives except for plasticizers and compatibilizers.

(25). The biodegradable multilayered film according to any one of (1) to (24), wherein the biodegradable multilayered film has a thickness of from 300 micrometers to 500 micrometers, preferably from 350 to 450 micrometers, more preferably from 380 to 420 micrometers.

(26). The biodegradable multilayered film according to any one of (1) to (25), wherein the core layer has a thickness of from 200 micrometers to 300 micrometers, preferably from 215 to 285 micrometers, more preferably from 230 to 270 micrometers.

(27). The biodegradable multilayered film according to any one of (1) to (26), wherein the first outer layer and/or the second outer layer has a thickness of from 50 micrometer to 100 micrometer, preferably from 60 to 90 micrometer, more preferably from 70 to 80 micrometer.

(28). The biodegradable multilayered film according to any one of (1) to (19) and (24) to (27), wherein the core layer when thermocompressed into a monolayer film and not comprising a compatibilizer has an elongation at break of 25 to 45 %, preferably 30 to 40 %, and an ultimate tensile strength of 3 to 5 MPa, preferably 3.5 to 4.5 MPa.

(28a). The biodegradable multilayered film according to any one of (1) to (19) and (24) to (27), wherein the core layer when extruded into a monolayer film and not comprising a compatibilizer has an elongation at break in cross direction (CD) of 2 to 20% and in machine direction (MD) of 2 to 15%, and an ultimate tensile strength in cross direction (CD) of 3 to 6 MPa, and in machine direction (MD) of 5 to 10 MPa.

(29). The biodegradable multilayered film according to any of (20) to (23), wherein the core layer when thermocompressed into a monolayer film and comprising a compatibilizer has an elongation at break of 50 to 110 %, preferably 70 to 90 % and an ultimate tensile strength of 4 to 6 MPa, preferably 4.5 to 5.5 MPa.

(29a). The biodegradable multilayered film according to any of (20) to (23), wherein the core layer extruded into a monolayer film and comprising a compatibilizer has an elongation at break in CD of 2 to 30% and in MD of 4 to 35%, and an ultimate tensile strength in CD of 3 to 7 MPa and in MD of 6 to 11 MPa.

(30). The biodegradable multilayered film according to any one of (1) to (29), wherein the multilayered film has an elongation at break in machine direction (MD) of up to 200% and in cross direction (CD) of up to 100%.

(31). The biodegradable multilayered film according to any of (1) to (19) and (24) to (28), wherein the biodegradable multilayered film when extruded and not comprising a compatibilizer has an elongation at break in machine direction (MD) of up to 200%, preferably of 10 to 150%, and in cross direction (CD) of up to 100%, preferably of 10 to 80%.

(32). The biodegradable multilayered film according to any one of (20) to (27) and (29), wherein the biodegradable multilayered film when extruded and comprising a compatibilizer has an elongation at break in machine direction (MD) of up to 20%, preferably of 5 to 20%, and in cross direction (CD) of up to 70 %, preferably of 20 to 70 %.

(33). The biodegradable multilayered film according to any one of (1) to (19) and (24) to (28) and (31), wherein the biodegradable multilayered film when extruded and not comprising a compatibilizer has an ultimate tensile strength in MD of 7 to 15 MPa and in CD of 4 to 8 MPa.

(34). The biodegradable multilayered film according to any one of (20) to (27) and (29) and (32), wherein the biodegradable multilayered film when extruded and comprising a compatibilizer has an ultimate tensile strength in MD of 4 to 10 MPa and in CD of 4 to 10 MPa.

(35). The biodegradable multilayered film according to any one of (1) to (34), wherein the bio-based carbon content of said biodegradable multilayered film is at least 20 %.

(36). The biodegradable multilayered film according to any one of (1) to (35), wherein said biodegradable multilayered film has a flex-durability lower than 10 pinholes as measured according to standard ASTM F392-A (2004) on a A4 sheet.

(37). The biodegradable multilayered film according to any of (1) to (36), which is suitable for manufacturing a bag usable as a bioreactor.

(38). A process for manufacturing the biodegradable multilayered film according to any one of (1) to (37), comprising the following steps:

- introducing and melting the blend of a thermoplastic starch (TPS) and polybutylene terephthalate (PBAT) into a first extruder to form a core layer stream;

- introducing and melting the first polymer into a second extruder to form a first outer layer stream;
- introducing and melting the second polymer into a third extruder to form a second outer layer stream or alternatively, if first and second polymer are identical, connecting the second extruder with a feedblock to form a first outer layer stream and a second outer layer stream;
- introducing the core layer stream, first outer layer stream and second outer layer stream into a feedblock to form a 3-layered melt stream;
- introducing the 3-layered melt stream into a die to form a multilayered film.

(39). The process according to (38), wherein the multilayered film is introduced into a calendar.

(40). The process according to (38) or (39), wherein the thermoplastic starch (TPS) introduced into the extruder comprises a moisture content of 10 to 15 wt.%.

(41). A biodegradable multilayered film obtained by the process according to (38) to (40).

(42). A single-use bag whose wall comprises the multilayer film according to anyone of (1) to (37).

(43). A bioreactor comprising the single-use bag according to (42).

(44). A container suitable for mixing, packaging, storing or transporting biopharmaceuticals comprising the single-use bag according to (42).

## Detailed description of the invention

Further aspects, features and advantages of the exemplary embodiments will become apparent from the detailed description which follows.

The patents, published applications and scientific literature referred to herein establish the knowledge of those with skill in the art and are hereby incorporated by reference in their entireties to the same extent as if each was specifically and individually indicated to be incorporated by reference.

As used herein, whether in a transitional phrase or in the body of a claim, the terms "comprise(s)" and "comprising" are to be interpreted as having an open-ended meaning. That is, the terms are to be interpreted synonymously with the phrases "having at least" or "including at least". When used in the context of a method, the term "comprising" means that the method includes at least the recited steps, but may include additional steps.

The terms "consists essentially of" or "consisting essentially of" have a partially closed meaning, that is, they do not permit inclusion of steps or features or components which would substantially change the essential characteristics of a method or composition; for example, steps or features or components which would significantly interfere with the desired properties of the compounds or compositions described herein, i.e., the method or composition is limited to the specified steps or materials and those which do not materially affect the basic and novel characteristics of the method or composition. The terms "consists of" and "consists" are closed terminology and allow only for the inclusion of the recited steps or features or components.

As used herein, the singular forms "a," "an" and "the" specifically also encompass the plural forms of the terms to which they refer, unless the content clearly dictates otherwise.

The term "about" is used herein to mean approximately, in the region of, roughly, or around. When the term "about" is used in conjunction with a numerical range, it modifies that range by extending the boundaries above and below the numerical values set forth.

The term "dissolved" or "substantially dissolved" is used herein to mean the solubilization of a solid in a solution. It can be considered that a solid is "dissolved" or "substantially dissolved" in a solution when the resulting solution is clear or substantially clear.

As used herein, the recitation of a numerical range for a variable is intended to convey that the variable can be equal to any values within that range. Thus, for a variable which is inherently discrete, the variable can be equal to any integer value of the numerical range, including the end-points of the range. Similarly, for a variable which is inherently continuous, the variable can be equal to any real value of the numerical range, including the end-points of the range. As an example, a variable which is described as having values between 0 and 2, can be 0, 1 or 2 for variables which are inherently discrete, and can be 0.0, 0.1, 0.01, 0.001, or any other real value for variables which are inherently continuous.

In the specification and claims, the singular forms include plural referents unless the context clearly dictates otherwise.

Technical and scientific terms used herein have the meaning commonly understood by one of skill in the art to which the present description pertains, unless otherwise defined.

According to the present disclosure, the expression "a layer comprises X" means that said layer comprises X in any amounts or is substantially composed of X.

## CORE LAYER

The biodegradable multilayered film of the present disclosure comprises a core layer.

The core layer comprises a blend of a thermoplastic starch (TPS) and polybutylene terephthalate (PBAT).

The blend of the thermoplastic starch (TPS) and polybutylene terephthalate (PBAT) of the core layer may comprise the TPS and PBAT in a weight ratio of from 60:40 to 40:60, preferably from 55:45 to 45:55, more preferably 50:50.

The thermoplastic starch (TPS) of the core layer comprises preferably a plant-based starch. The starch may be selected from the group consisting of corn starch, tapioca starch, cassava starch, wheat starch, native wheat starch, potato starch, rice starch, sorghum starch, seaweed starch and their mixtures. In an example, the thermoplastic starch may comprise native wheat starch. Plant-based starch comprises polysaccharides which are of great interest mainly for short-term applications due to their ability to biodegrade in standardized environments, their cheapness and wide availability.

Since thermal degradation of starch occurs below the theoretical melting temperature, starch is conventionally plasticized to obtain a processable thermoplastic-like material. A blend of a plasticizer with starch is called thermoplastic starch (TPS). Plasticizers may be added to the thermoplastic starch (TPS) in an amount of 15 to 45% by weight, preferably 22 to 35% by weight, more preferably 25 to 35% or 27 to 32% by weight based on the weight of the thermoplastic starch.

Plasticizers may be non-volatile plasticizers such as polyols or amides or their mixtures. These may be added in an amount of 10 to 25% by weight, preferably 15 to 22% by weight based on the weight of the thermoplastic starch. The plasticizer may be selected from the group consisting of glycerol, sorbitol, ethylene glycol, urea, formamide and their mixtures. Preferably, glycerol may be added as plasticizer.

Another common plasticizer is water, which is volatile so that the concentration of water in a starch is somewhat dependent on the ambient atmosphere, i.e. its moisture content and temperature. Water may be added during production of thermoplastic starch in 5 to 20 % by weight or 7 to 15 % by weight. However, stringent control of moisture content during and after processing is necessary to maintain a desired concentration of water in the thermoplastic starch and to preserve thermoplasticity and mechanical properties.

However, thermoplastic starch suffers from significant limitations such as mechanical properties compared to fossil-based engineered polymers, critical ageing, high hydrophilicity and reduced water vapor barrier properties. To overcome these limitations while preserving biodegradability several strategies have been developed such as the development of multiphase materials incorporating biodegradable polyesters or the development of multilayered films incorporating layers of biodegradable polyesters.

In the present disclosure the thermoplastic starch (TPS) is blended with polybutylene terephthalate (PBAT) to constitute the core layer. PBAT is a biodegradable polyester.

The core layer may comprise the TPS and PBAT in a weight ratio of from 60:40 to 40:60, preferably from 55:45 to 45:55, more preferably 50:50. The properties and constitution of the PBAT of the core layer may be the same as the properties of the PBAT used for the first and second outer layer.

In some examples the blend of thermoplastic starch (TPS) and polybutylene terephthalate (PBAT) of the core layer may further comprise a compatibilizer. Due to interfacial tensions between polyesters and polysaccharides TPS/PBAT multiphase systems may exhibit limited miscibility, yielding blends having limited mechanical and barrier properties. Therefore, some TPS/PBAT blends may need compatibilization, i.e. the addition of a compatibilizer.

The compatibilizer may be selected from the group consisting of a maleic anhydride grafted polyester, a polyvinylacetate, and a co-polymer comprising styrene monomers and epoxide functionalised (meth)acrylate or (meth)acrylic acid monomers. The compatibilizer may preferably be a co-polymer comprising styrene monomers and epoxide functionalised (meth)acrylate or (meth)acrylic acid monomers, which is a reactive compatibilizer sold under the tradename Joncryl®. Compatibilizers of this type are well known in the art including in the formulation of biodegradable blends.

The compatibilizer may be comprised in amounts of from 0.05 to 0.7 parts per hundred (phr), from 0.1 to 0.6, or 0.2 to 0.5 phr, preferably from 0.1 to 0.3 phr, wherein parts per hundred (phr) refers to the blend of TPS and PBAT.

Compatibilization using compatibilizers such as Joncryl® may be carried out by a two-step process of a) first mixing and reacting the compatibilizer with PBAT followed by b) blending with TPS or a blend of TPS/PBAT. Alternatively, the compatibilizer may be added to a TPS/PBAT blend. The inventors of the present disclosure found that in some examples the two-step process leads to advantageous mechanical properties of the core layer and the multilayered films of the instant disclosure. Adding a compatibilizer to the core layer improves adhesion of individual layers present in a multilayer film.

Regarding the properties of the core layer, a core layer, which does not comprise a compatibilizer and which has been thermocompressed into a monolayer film, has an elongation at break of 25 to 45 %, preferably 30 to 40 %, and an ultimate tensile strength of 3 to 5 MPa, preferably 3.5 to 4.5 MPa.

A core layer which does not comprise a compatibilizer and which has been formed by extrusion into a monolayer film has an elongation at break in cross direction (CD) of 2 to 20% and in machine direction (MD) of 2 to 15%, and an ultimate tensile strength in cross direction (CD) of 3 to 6 MPa, and in machine direction (MD) of 5 to 10 MPa.

A core layer which has been thermocompressed into a monolayer film and which comprises a compatibilizer has an elongation at break of 50 to 110 %, preferably 70 to 90 % and an ultimate tensile strength of 4 to 6 MPa, preferably 4.5 to 5.5 MPa.

A core layer which has been formed by extrusion into a monolayer film and comprises a compatibilizer has an elongation at break in CD of 2 to 30% and in MD of 4 to 35%, and an ultimate tensile strength in CD of 3 to 7 MPa and in MD of 6 to 11 MPa.

The thickness of the core layer may be from 200 micrometer to 300 micrometer, preferably from 215 to 285 micrometer, more preferably from 230 to 270 micrometer.

The core layer may be produced by first mixing a starch with a plasticizer, such as glycerol, in a turbo-mixer. Mixing may then be continued under addition of water yielding a powder. The powder may then be subjected to extrusion by for example a twin-screw extruder affording TPS granules. The TPS granules may be equilibrated for a given amount of time in a desiccator having desired humidity. TPS granules and PBAT pellets may be manually mixed and then extruded to afford granules comprising a blend of TPS and PBAT. During production of a multilayered film the granules comprising a blend of TPS and PBAT are introduced into an extruder and are co-extruded with the first and second outer layers by way of cast extrusion.

## FIRST and SECOND OUTER LAYER

The biodegradable multilayered film comprises a first and a second outer layer.

The first outer layer comprises a first polymer selected from the group consisting of poly butylene adipate terephthalate (PBAT), poly butylene succinate (PBS), poly butylene succinate adipate (PBSA), and mixtures thereof.

The second outer layer comprises a second polymer selected from the group consisting of polybutylene adipate terephthalate (PBAT), poly butylene succinate (PBS), poly butylene succinate adipate (PBSA), and mixtures thereof.

The first and second outer layer may comprise the same or different polymers. The first and second outer layers may consist essentially of the above polymers, meaning that first and second outer layers comprise in addition to the above polymers only additives present in commercially available polymer products, wherein these additives are present in less than 5% per weight, preferably less than 3% per weight with respect to one layer, that is the first or the second outer layer, and impurities comprised in the polymers as a consequence of their manufacture. In particular, since one of the outer layers of the multilayered film is intended to get in contact with and remain in contact for extended periods of time with a biopharmaceutical fluid such as a cell culture, the outer layer should not contain slip agents or phthalate as plasticizers, because these additives may, after sterilization with gamma or X-ray irradiation, contain or provide low molecular weight molecules able to migrate to the surface of the layer, thereby contaminating the cell medium.

Furthermore, the outer layers should not contain additives or only limited amounts (less than 0.10 wt.%, preferably less than 0.07 wt%) of additives that form degradation compounds due to gamma irradiation in the range of 25 kGy - 50 kGy, wherein the degradation compounds can slow down or delay cellular growth.

Such degradation compounds able to slow down or delay cellular growth may be detected by testing the film in a Biostat® Cultibag RM system from Sartorius Stedim Biotech during 7 days, with Per-C6 cells line, by comparing with a control film (which does not delay or slow down cellular growth), such as EVA film BF1400 marketed by Renolit.

Such degradation compounds may be released from antioxidants. Antioxidants are used to prevent polymer degradation which may be initiated by heat, light, impurities such as catalyst residue, or mechanical stress. Therefore the first and second outer layer preferably do not contain antioxidants or only limited amounts of antioxidants, i.e. less than 0.3 wt.% (preferably less than 0.10 wt.%, more preferably less than 0.07 wt.%).

In an example, the first outer layer and/or the second outer layer comprises polybutylene adipate terephthalate (PBAT).

The PBAT comprised in the first outer layer and/or the second outer layer and the blend of TPS/PBAT of the core layer may comprise from 55 to 45 mol%, preferably from 53 to 47 mol% of butylene adipate block and from 45 to 55 mol%, preferably from 47 to 53 mol% butylene terephthalate block.

Said PBAT may have a melting point measured by DSC as per ASTM E793-06 of from 105 to 125 degrees Celsius, preferably from 110 to 120 degrees Celsius.

Said PBAT may have a melt volume rate (measured per ISO 1133 and at 190 degrees Celsius and 2.16 kg) of from 2.0 to 5.0 ml/ 10 min, preferably from 2.5 to 4.5 ml/ 10 min.

Said PBAT may have a melt flow index (measured per ISO 1133 and 190 degrees Celsius and 2.16 kg) of from 2 to 6 g/ 10 min, preferably from 2.7 to 4.9 g/10 min.

Said PBAT may have a number average molecular weight of from 10 to 70, preferably from 20 to 60, more preferably from 30 to 50 kg/mol measured by size exclusion chromatography.

Said PBAT may have a dispersity of from 1.5 to 2.5, preferably from 1.6 to 2.3, more preferably from 1.8 to 2.2 as measured by size exclusion chromatography.

Said PBAT when it has been extruded into a monolayer film may have an ultimate tensile strength in machine direction (MD) of 14 to 20 MPa and in cross direction (CD) of 12 to 15 MPa, measured as per ISO 527-3 or ASTM D638.

Said PBAT when extruded into a monolayer film may have an elongation at break in machine direction (MD) of 350 to 800 % and in cross direction (CD) of 500 to 700 %, measured as per ISO 527-3 or ATSM D638.

The first outer layer and/or the second outer layer may have a thickness of from 40 micrometer to 100 micrometer, preferably from 60 to 90 micrometer, more preferably from 70 to 80 micrometer.

The first and second outer layers contribute to the mechanical strength of the bag wall. For that purpose, they must be sufficiently flexible to withstand high mechanical stress, but they shall not be too stretchable. At the same time, the outer layers must be sufficiently rigid, in order to prevent deformation of a bag or container when it is filled with a biopharmaceutical fluid. In addition to the desired balance of flexibility and rigidity, the outer layers must have a certain sticking effect so they are sealable on themselves to form a 2D or 3D bag. Also, as described above, the outer layers must be made from a material that can get and remain in contact with a biopharmaceutical over extended periods of time, e.g. during the time of cell culture (e.g. several days) or during storage, without causing degradation of the film and of the biopharmaceutical product.

The outer layer may be manufactured by extrusion. Preferably, the outer layer is manufactured by cast extrusion with the other layers of the multilayered film.

## TIE LAYERS

The biodegradable multilayered film may further comprise one or more tie layers between the first outer layer and the core layer, and between the second outer layer and the core layer.

The tie layer must be able to seal the outer layers with the core layer and to prevent separation of these layers during the use of the bag.

The one or more tie layers may comprise a blend of a thermoplastic starch (TPS) and a polymer selected from the group consisting of polybutylene adipate terephthalate (PBAT), poly butylene succinate (PBS), poly butylene succinate adipate (PBSA), and mixtures thereof. Preferably, the polymer of the one more tie layers is PBAT. The properties and constitution of the TPS and PBAT are as described above.

In the one or more tie layers, the TPS and the polymer may be comprised in a weight ratio of from 60:40 to 20:80, more preferably from 45:55 to 40:60.

In an example, when a tie layer is present in between both the first and the second outer layers and the core layer, the two or more tie layers may have identical compositions.

Tie layers may be added to improve layer adhesion between outer layers and core layers to avoid separation of layers during use of the bag.

The thickness of the tie layers may be from 5 $\mu$m and 50 $\mu$m, preferably from 10 and 30 $\mu$m, more preferably from 15 $\mu$m and 25 $\mu$m.

Tie layers may be manufactured by extrusion. Preferably, they are manufactured by cast extrusion with the other layers of the multilayered film.

## The MULTILAYERED FILM

The biodegradable multilayered film of the present disclosure comprises stacked to one another in the following order:

> a) a first outer layer comprising a first polymer selected from the group consisting of polybutylene adipate terephthalate (PBAT), poly butylene succinate (PBS), poly butylene succinate adipate (PBSA), and mixtures thereof,
> b) a core layer comprising a blend of a thermoplastic starch (TPS) and polybutylene terephthalate (PBAT),
> c) a second outer layer comprising a second polymer selected from the group consisting of polybutylene adipate terephthalate (PBAT), poly butylene succinate (PBS), poly butylene succinate adipate (PBSA), and mixtures thereof.

In one embodiment, the first outer layer and the core layer are in direct contact, and the second outer layer and the core layer are in direct contact.

In an example, the biodegradable multilayered film of the present disclosure comprises stacked to one another in the following order:

> a) a first outer layer comprising as a first polymer PBAT,

b) a core layer comprising a blend of a thermoplastic starch (TPS) and PBAT,

c) a second outer layer comprising as a second polymer PBAT.

In an example the above biodegradable multilayered film does not comprise a compatibilizer.

In another example the above film comprises a compatibilizer such as a co-polymer comprising styrene monomers and epoxide functionalised (meth)acrylate or (meth)acrylic acid monomers. In an example the above biodegradable multilayered film has an elongation at break in machine direction (MD) of up to 200% and in cross direction (CD) of up to 100% measured by ISO 527 or ASTM D882.

In another embodiment, the biodegradable multilayered film further comprises one or more tie layers between the first outer layer and the core layer, and between the second outer layer and the core layer, wherein the one or more tie layers comprise a blend of a thermoplastic starch (TPS) and a polymer selected from the group consisting of polybutylene adipate terephthalate (PBAT), poly butylene succinate (PBS), poly butylene succinate adipate (PBSA), and mixtures thereof.

In an example, the biodegradable multilayered film of the present disclosure comprises stacked to one another in the following order:

a) a first outer layer comprising a first polymer selected from the group consisting of polybutylene adipate terephthalate (PBAT), poly butylene succinate (PBS), poly butylene succinate adipate (PBSA), and mixtures thereof,

b) a first intermediate layer comprising a blend of a thermoplastic starch (TPS) and a polymer selected from the group consisting of polybutylene adipate terephthalate (PBAT), poly butylene succinate (PBS), poly butylene succinate adipate (PBSA), and mixtures thereof,

c) a core layer comprising a blend of a thermoplastic starch (TPS) and polybutylene terephthalate (PBAT),

d) a second intermediate layer comprising a blend of a thermoplastic starch (TPS) and a polymer selected from the group consisting of polybutylene adipate terephthalate (PBAT), poly butylene succinate (PBS), poly butylene succinate adipate (PBSA), and mixtures thereof,

e) a second outer layer comprising a second polymer selected from the group consisting of polybutylene adipate terephthalate (PBAT), poly butylene succinate (PBS), poly butylene succinate adipate (PBSA), and mixtures thereof.

In another example, the biodegradable multilayered film of the present disclosure comprises stacked to one another in the following order

a) a first outer layer comprising as a first polymer polybutylene adipate terephthalate (PBAT),

b) a first intermediate layer comprising PBAT,

c) a core layer comprising a blend of a thermoplastic starch (TPS) and PBAT,

d) a second intermediate layer comprising PBAT,

e) a second outer layer comprising as a second polymer PBAT.

In an example the above biodegradable multilayered film does not comprise a compatibilizer. In another example the above film comprises a compatibilizer such as a co-polymer comprising styrene monomers and epoxide functionalised (meth)acrylate or (meth)acrylic acid monomers.

In an example the above biodegradable multilayered film has an elongation at break in machine direction (MD) of up to 200% and in cross direction (CD) of up to 100% measured by ISO 527 or ASTM D882.

The biodegradable multilayered film may have a thickness of from 300 micrometer to 500 micrometer, preferably from 350 to 450 micrometer, more preferably from 380 to 420 micrometer.

Properties of the multilayered film

The multilayered film of the present disclosure is biodegradable. The biodegradability is measured as per the standard NF EN 13432.

The biodegradable multilayered film may have a bio-based carbon content of at least 20 %, wherein the at least 20% are the result of the choice of individual components constituting individual layers and their components, respectively, of the multilayered film. The biobased content can be measured according to standard ASTM D6866.

The multilayered film of the instant disclosure typically has an elongation at break in machine direction (MD) of up to 200% and in cross direction (CD) of up to 100%.

In an example, the multilayered film, which has been extruded and which does not comprise a compatibilizer, may have an elongation at break in machine direction (MD) of up to 200%, preferably of 10 to 150%, and in cross direction (CD) of up to 100%, preferably of 10 to 80%. The multilayered film may have an ultimate tensile strength in MD of 7 to 15 MPa and in CD of 4 to 8 MPa.

In an example, the biodegradable multilayered film which has been extruded and which comprises a compatibilizer may have an elongation at break in machine direction (MD) of up to 20%, preferably of 5 to 20%, and in cross direction (CD) of up to 70 %, preferably of 20 to 70 %.

The multilayered film may have an ultimate tensile strength in MD of 4 to 10 MPa and in CD of 4 to 10 MPa.

The biodegradable multilayered film may have a flex-durability lower than 10 pinholes as measured according to standard ASTM F392-A (2004) on an A4 sheet.

The outer layers of the biodegradable multilayered film do not lead to or only lead to minor amounts of degradation compounds formed on gamma irradiation in the range of 25 kGy - 50 kGy of the film, wherein the degradation compounds can slow down or delay cellular growth and thereby interfere with a reaction taking place in a bioreactor.

<u>Production of the multilayered film</u>

The layers may be processed into a multilayered film by standard extrusion techniques well known by the person skilled in the art including extrusion or coextrusion such as cast or blow extrusion, extrusion coating, extrusion coating and lamination or a combination thereof, for instance by co-extruding at least two layers and then coating on another layer, or by coextruding at least two layers, extruding another layer and then coating and laminating the coextruded layer and extruded layer together.

Preferably, the multilayered film is manufactured by using a cast coextrusion process.

The present disclosure thus provides a process for manufacturing the biodegradable multilayered film as described above, comprising the following steps:

- introducing and melting the blend of a thermoplastic starch (TPS) and polybutylene terephthalate (PBAT) into a first extruder to form a core layer stream;
- introducing and melting the first polymer into a second extruder to form a first outer layer stream;
- introducing and melting the second polymer into a third extruder to form a second outer layer stream;
- introducing the core layer stream, first outer layer stream and second outer layer stream into a feedblock to form a 3-layered melt stream;
- introducing the 3-layered melt stream into a die to form a multilayered film.

Alternatively, a multilayered film having identical first and second outer layers may be produced by a process comprising a step of connecting the above second extruder with a feedblock to form a first outer layer stream and a second outer layer stream, instead of introducing and melting the second polymer into a third extruder to form a second outer layer stream. The remaining steps of the process are as described in the preceding paragraph.

In the above process, the rotational frequencies of the extruders may be chosen from 30 to 50 rpm, preferably 35 to 45 rpm, more preferably 37 to 40 rpm.

In the above process a temperature gradient of 80 to 130, preferably 100 to 130 degrees Celsius may be used in the first extruder to form the core layer stream. A temperature gradient of 80 to 120, preferably 100 to 120 degrees Celsius may be used in the second and third extruder to form first and second outer layer streams, respectively.

In the above process the feed block may be maintained at 120 to 140, preferably 125 to 135, more preferably 130 degrees Celsius while forming the 3-layered stream. The feed block may be configured as 25/50/25 plates.

In the above process the die may be maintained at 120 to 140, preferably 125 to 135, more preferably 130 degrees Celsius to afford the multilayered film.

The process may include a step wherein the multilayered film is introduced into a calender after having left the die. The calender may be set to 30 degrees Celsius.

The process may comprise introducing into the extruder a thermoplastic starch (TPS) having a moisture content of 10 to 15 wt.%, preferably 11 to 13 wt.%, or around 12 wt.%.

The process should be conducted free of slip agents and other low molecular weight additives that may increase the extractables to an unacceptable level. In general, additives shall be avoided during production and processing except for plasticizers which are added to form thermoplastic starch (TPS) and compatibilizers which may be added to the blend of TPS and PBAT. Additives comprised in commercially available raw material polymers may not be avoided, but are only acceptable as long as their concentration does not interfere with their suitability and technical application of the instant disclosure.

The instant disclosure also provides a biodegradable multilayered film obtained by the above process.

## Bags produced by the process

Due to the properties described above, the biodegradable multilayered film of the instant disclosure is particularly suited for manufacturing single-use bags, including 2D bags or 3D bags. Thus the present disclosure provides a single-use bag whose wall comprises the biodegradable multilayered film as described above.

The biodegradable multilayered film of the instant disclosure withstands various mechanical stresses making it usable for a wide range of applications, such as for bioreactors regardless of the mode of stirring or for storing or transporting a fluid. The bags must also be suitable for small or large volumes.

Such bags may be manufactured according to standard techniques well known by the person skilled in the art.

The biodegradable multilayered film of the instant disclosure is particularly suited for manufacturing single-use bags intended to contain a cell culture as it has no or limited impact on the cellular growth of a culture medium further to sterilization by gamma or X-ray irradiation. In particular, the contact layer of the multilayered film of the invention releases no or limited amount of degradation compound due to gamma irradiation, said degradation compound interfering with cellular growth.

The biodegradable multilayered film of the instant disclosure is also suited for manufacturing mixing, packaging, storage or transport containers.

## Brief description of the figures

Figure 1: Screw profile used for the extrusion of TPS and TPS/polyester blends.

Figure 2: Oxygen barrier properties of single and multilayer films: permeability coefficient (top), diffusion coefficient (middle), and solubility coefficient (bottom).

Figure 3: Water vapor sorption isotherms of the extruded films

Figure 4: Results of cell culture growth assessment on extruded monolayer films

The invention will now be further described in the following examples. These examples are offered to illustrate the invention and should in no way be viewed as limiting the invention.

## EXAMPLES

### Materials

Native Wheat Starch, 25 wt% amylose, initial moisture content < 12.5%, protein content < 0.5 %, obtained from Roquette (France)

Glycerol (purity > 98%) - used as non-volatile plasticizer in the starch obtained from Fisher Scientific (France)

Poly(butylene- adipate-co-terephthalate) (PBAT) - extrusion grade, having $M_n$=38 kg/mol and dispersity D of 2.0 determined by size exclusion chromatography (SEC) - commercial product Ecoflex F blend® of BASF,

Compatibilizer Joncryl® ADR4368-CS (purity > 99% and $M_w$ equal to 6800 g/mol from BASF Poly(butylene succinate) (PBS), extrusion grade, $M_n$ = 71 kg/mol, dispersity D of 2.4 as determined by SEC, from NaturePlast (France)

Poly(butylene succinate-co-adiapate) (PBSA), extrusion grade, $M_n$ = 74 kg/mol, dispersity D of 2.4 as determined by SEC, from NaturePlast (France).

Native wheat starch, glycerol and polyesters were dried in a ventilated oven for approximately 15 hours at 70 degrees Celsius before use.

### Measuring Methods

Unless otherwise mentioned, the density of polymers referred to in the present application is as measured according to the Standard Test Method ASTM D792-08.

Biodegradability is measured as per the standard NF EN 13432.

The biodegradable multilayered film may have a bio-based carbon content of at least 20 %. The at least 20% are the result of the choice of individual components constituting individual layers and their components, respectively, of the multilayered film, and can be calculated accordingly. Alternatively, the biobased content can be measured according to standard ASTM D6866.

Average values of ultimate tensile strength (UTS) and elongation at break ($\varepsilon$max):

Uniaxial tensile tests were performed on an Instron 5567H universal testing machine (USA) with a 10kN load cell and a constant crosshead speed of 20 mm min-'. The temperature in the room was fixed at 23 °C. For each formulation, at least four dumbbell samples, with dimensions of approximately $45 \times 5 \times 1$ mm$^3$ and punched from the films, were tested. Average values of ultimate tensile strength (UTS) and elongation at break ($\varepsilon$max) were finally obtained from the curves. Statistical analysis of tensile tests data was performed with Welch's unequal variances t-test, taking as statistically significant a p value < 0.01. The testing conditions are highly similar to ASTM D638 or ISO 527-3.

Number average molar mass (Mn) and dispersity ($Đ$):

Size exclusion chromatography (SEC) measurements were performed in chloroform (HPLC grade) with a Shimadzu liquid chromatograph equipped with a PLGel Mixed-C and a PLGeL 100 Å column and a Shimadzu RID-20A refractive index detector. Number average molar mass (Mn) and dispersity ($Đ$) were determined from a calibration based on polystyrene standards. $8 \pm 1$ mg samples were dissolved in chloroform and filtered through a 0.2 $\mu$m PTFE membrane before injection. The injection volume was set to 50 $\mu$L and the flow rate was 0.8 ml min$^{-1}$. All analyses were performed at 25 °C.

Melting point:

Differential scanning calorimetry (DSC) analyses were performed using a Q2000 DSC apparatus from TA instrument (USA). 1.3 to 2.6 mg samples were placed in standard aluminum pans and analyzed under a 50 ml min-' nitrogen flow. After a quick heating to 150 °C, the samples were cooled to -80 °C and heated again to 150 °C, both with a 10 °C min$^{-1}$ rate.

The fex-durability was measured according to standard ASTM F392-A (2004) on an A4 sheet.

The melt volume rate was measured as per ISO 1133 and at 190 degrees Celsius and 2.16 kg.

The melt flow index was measured as per ISO 1133 and 190 degrees Celsius and 2.16 kg.

Permeation of oxygen:

Permeation of oxygen (99.9% purity, Air Liquide) was evaluated at 25 °C by means of a lab-built device based on the time-lag barometric determination (Métayer, M., Labbé, M., Marais, S., Langevin, D., Chappey, C., Dreux, F., Brainville, M., Belliard, P., 1999. Diffusion of water through various polymer films: a new high performance method of characterization. Polym. Test. 18, 533-549). A preliminary high vacuum desorption was performed on the cell measurement containing the sample. When applying a gas pressure, the quantity of transferred gas through the film was monitored until reaching the stationary state of the permeation process. This is detected by a constant increase of gas pressure by the pressure sensor at the permeation die. The permeability coefficient P was directly determined by Equation 2.2:

$$P = J_{st} * L / \Delta p \qquad (2.2)$$

where Jst is the stationary flux, $\Delta$p is the pressure difference between the two faces of the film, L is the film thickness and P is expressed in Barrer (1 Barrer = 10$^{-10}$ cm$^3$(STP) cm cm$^{-2}$ s-$^1$ cmHg-1). By taking into account that there was no plasticization effect caused by the gas molecules during the measurement, the diffusion coefficient D can be assumed constant and determined by Equation 2.3:

$$D = L^{2}/(6 * t_{1}) \qquad (2.3)$$

where t1 is the time-lag, which was determined from the intercept of the asymptotic straight line of the stationary flux with the time axis. On the basis that the permeability coefficient is the product of the diffusivity and the solubility coefficients, the solubility coefficient S can be deduced from Equation 2.4:

$$S = P/D \qquad (2.4)$$

The measurements were triplicated from three different samples per tested film for reproducibility.

Water vapor sorption kinetic measurements:

Water vapor sorption kinetic measurements were performed using an electronic microbalance Cahn D200 enclosed in a gravimetric dynamic vapor sorption analyzer (Surface Measurement Systems, Ltd., London, UK), as described in Follain et al. "Water Transport Properties of Bio-nanocomposites Reinforced by Luffa Cylindrica Cellulose Crystals" in J. Membr. Sci., 2013, vo. 427, pp. 218 - 229. The measurement temperature was set at 25.0 ($\pm$ 0.1) °C. The water activity was adjusted by mixing dry and moisture-saturated nitrogen flowing (N2 gas, 99.999% of purity, Air Liquide) using electronic mass flow controllers. Approximately 8 mg of polymer film (diameter of 8 mm) was initially dried until no further change in dry mass was measured and then submitted to a hydration cycle by exposure to selected water vapor pressures. The film mass evolution was recorded with time as a function of water activity and the sorption kinetics was followed step by step until the weight at equilibrium was reached. Water vapor sorption isotherms were determined from the dry mass and the mass at equilibrium state for each water activity. The water mass gain Ceq was determined by Eq. (2.5):

$$Ceq\ (\%) = (meq - m0)/m0 \times 100 \qquad (2.5)$$

where m0 and meq are the dry sample mass and the sample mass at equilibrium state, respectively.

Cell culture growth assessment:

Cell culture growth assessment was performed in accordance with ASTM E3231-19. The films were first transferred into borosilicate glass flasks and gamma-irradiated at 48 kGy. Ten days later, the extraction of leachables was performed using ActiCHO-SM, a protein-, hydrolysate-, and animal-derived component-free cell culture medium (Cellca, Germany) for 3 days at 36.8 °C and under constant shaking at 120 rpm. In this set up, a surface area to liquid volume ratio of 0.3 $cm^2$ $ml^{-1}$ was applied. An empty borosilicate glass flask was used as a reference and a 2% solution of DMSO was used as a negative control. The extract was finally transferred to six-well plates (ThinCertTM, Greiner Bio-one, Germany) for subsequent growth studies. The Chinese hamster ovary cell line CHO-DG44 (Cellca,Germany) was selected for cell cultivation. An inoculum cell density of 0.2 $\times$ $10^6$ cells $ml^{-1}$ was applied. Each film was examined in triplicates in a CO2 incubator (CERTOMAT CTplus,Sartorius, Germany) over a period of 4 days. Viable cell count and viability were measured using a NucleoCounter (Chemometec, Denmark).

Preparation Examples

1. Plasticized starch preparation

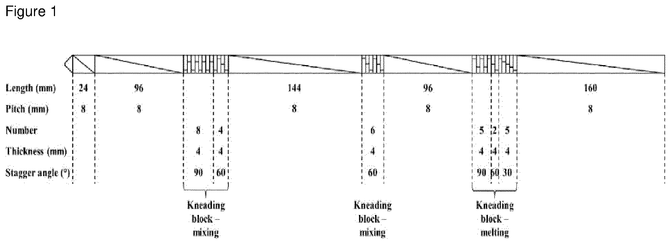

The TPS formulation was based on 70 wt% of native starch, 18 wt% of glycerol and 12 wt% of distilled water. Granules of plasticized starch (TPS) were prepared according to the following procedure. Native wheat starch was first dried overnight at 70 °C in a ventilated oven. Then the starch powder was introduced into a Papenmeier turbo-mixer and the glycerol was slowly added under stirring (approx. 700 rpm). After complete addition of glycerol, the mixture was mixed at high speed (approx. 1400 rpm) to obtain a homogeneous dispersion. The mixture was then placed in a ventilated oven at 145 °C for 60 min and occasionally stirred, allowing vaporization of water and diffusion of glycerol into the starch granule. After cooling, the dry-blend was introduced in the Papenmeier turbo-mixer again and the proper amount of distilled water was slowly added under stirring. Then, the mixture was once more dispersed at high speed. Afterwards, the powder was extruded on a co-rotating twin-screw extruder (Haake Thermo Fisher Scientific, France), equipped with mixing elements, with a screws diameter of 16 mm and an L:D ratio of 40:1, as schematized in Figure 1. The profile was the same for both screw and was designed to ensure proper melting and mixing of the extruded materials. The screws speed was set to 80 rpm and the temperature profile was 80/105/110/115/120/120/115/110/105/100 °C, from the feed hopper to the circular die. The strand was cooled by air jets and granulated. The TPS granules were stored in a sealed polyethylene bag at room temperature until blends preparation.

2. Non-compatibilized TPS/polyester blends preparation

Beforehand, the TPS granules were equilibrated for 8 days in a desiccator at 23 °C and 58 % RH (relative humidity) and the polyester granules were dried overnight at 70 °C in a ventilated oven. TPS and polyester pellets were manually mixed and melt blended in the twin- screw extruder equipped with mixing elements. The screws speed was set to 20 rpm and the temperature profile was 80/105/130/135/145/145/135/130/125/120 °C, from the feed hopper to the circular die. The strand was cooled by air jets and granulated. The TPS/polyester granules were stored in sealed polyethylene bags at room temperature.

### 3. Compatibilized TPS/polyester blends preparation

In a first step, Joncryl® and dried polyester granules were manually mixed in a 100:1 ratio and melt blended in the twin-screw extruder equipped with mixing elements. The screws speed was set to 15 rpm and the temperature profile was 80/110/140/170/200/200/200/180/170/150 °C, from the feed hopper to the circular die. The strand was cooled by air jets and granulated. The obtained polyester/ Joncryl® granules were stored in a sealed polyethylene bag. Then, compatibilized TPS/polyester blends were prepared by manually mixing and melt blending TPS, polyester and polyester/Joncryl® granules in a 50:40:10, 50:30:20 or 50:0:50 ratio using the same extruder, yielding a compatibilized TPS/polyester blend containing 0.1, 0.2 or 0.5 phr of Joncryl®, respectively. The screw speed was set to 20 rpm and the temperature profile was 80/105/130/135/145/145/135/130/125/120 °C, from the feed hopper to the circular die. The strand was cooled by air jets and granulated. The compatibilized blend granules were equilibrated for 8 days in a desiccator at 23 °C and 58 % RH (relative humidity) and finally stored in sealed polyethylene bags.

### 4. Production of Mono- and multilayer films by (co)extrusion

Coextrusion of 3-layer films containing TPS/PBAT 50/50 or TPS/PBAT/Joncryl® 50/50/0.1 as a core layer and PBAT as outer layers was performed using the following setup:
TPS/PBAT 50/50 was extruded on a single-screw extruder with screw diameter of 25 mm, length to diameter ratio (l/D) of 20:1 and screw speed set at 40 rpm. The extruder was divided into 5 heating zones, set to 100/130/130/130/130 °C from the feed hopper to the feedblock. The extruder used for the extrusion of PBAT consisted of a single screw with 20 mm diameter, L/D of 20:1 and screw speed set at 37 rpm. The extruder was divided into 4 heating zones, set to 100/120/120/120 °C from the feed hopper to the feedblock. Each extruder was connected to a feedblock at its output. Both feedblocks were attached to a central feedblock composed of 4 plates, allowing the split of PBAT flow and layer distribution. At the output of the central feedblock, the 3-layer melt stream was conveyed to a 150 mm wide flat coat-hanger die. The die lips thickness was set to 0.6 mm. The final section of the coextrusion setup was a three-roll calendering system, with rolls temperature set to 30 °C. The targeted films thickness was 400 μm and was adjusted by modifying the pulling speed of the calender.

#### 4.1 Monolayer films obtained by thermocompression:

In preliminiary tests, which were directed at verifying and optimising blends before the production of the 3-layer films, core and outer layers were produced separately to obtain monolayer films of each individual layer. Finally, all films containing TPS were allowed to equilibrate at 23 °C and 58% RH for 4 weeks in a desiccator before characterization, for the post-processing period and the stabilization of the materials.
Uncompatibilized TPS/PBAT blends were prepared by twin screw extrusion employing the set up described above to produce beads, which were subsequently granulated to afford pellets, which were then molded by compression to obtain thermocompressed films. The impact of the polyester structure and content on the mechanical properties of the blends was investigated by testing three TPS blends for each selected polyester, with 10, 30 and 50% polyester content respectively. Then Ultimate Tensile Strength and Elongation at Break were measured:

| Polyester content (wt.%) | Ultimate Tensile Strength (MPa) | Elongation at Break (%) |
|---|---|---|
| 10 | 2.8 to 3.0 | 35-52% |
| 30 | 3.0 to 3.2 | 35-45% |
| 50 | 3.8 to 4.2 | 28-40% |

Then compatibilized TPS/PBAT blends were prepared applying a TPS/PBAT ratio of 50:50, and adding 0.1, 0.2 or 0.5 parts per hundred of Joncryl® compatibilizer of BASF (parts per hundred refers to the 50:50 blend of TPS/PBAT. Then Ultimate Tensile Strength and Elongation at Break were measured:

| Compatibilizer content (wt.%) | Ultimate Tensile Strength (MPa) | Elongation at Break (%) |
|---|---|---|
| 0.1 | 4.8 to 5.0 | 55 to 110% |
| 0.2 | 4.9 to 5.4 | 57 to 115 % |

(continued)

| Compatibilizer content (wt.%) | Ultimate Tensile Strength (MPa) | Elongation at Break (%) |
|---|---|---|
| 0.5 | 3.8 to 4.3 | 30 to 50% |

4.2. Multilayer Films:

Two blends, compatibilized and uncompatibilized, TPS/PBAT 50/50 and TPS/PBAT/Joncryl® 50/50/0.1, respectively, were selected as core layers of multilayer films with neat PBAT as outer layers and are referred to as Core (uncompatibilized) and Core-J (compatibilized).

As a first step, each layer was separately extruded to obtain reference monolayer films. Preliminary tests have shown that the filmsextruded at low screw speeds, e.g. 15 rpm, were rough and irregular. This was explained by the fact that TPS granules need sufficient shearing, specific mechanical energy (SME) and temperature with a global thermomechanical input to obtain an adequate viscocity at the exit of the extruder. At higher screw speeds, e.g. around 40 rpm, the obtained films were all smooth and more translucent than the films extruded at lower SME. The speed of each extruder was then configured to obtain roughly equal flow rates at their respective outputs.

The coextrusion of the multilayer film was carried out applying the set up under item 4 above, as follows: The blend of a thermoplastic starch (TPS) and polybutylene terephthalate (PBAT) was introduced into a first extruder to form the core layer stream. The first extruder had a temperature gradient of 100 to 130 degrees Celsius. The rotational frequency was set to 40 rpm, which lead to a pressure $P_{exit}$ of around 78 bar. The extruder design was 25mm/20D.

The PBAT was introduced into a second and third co-extruder to form streams of outer layers. The extruders had a temperature gradient of 100 to 120 degrees Celsius and a rotational frequence of 37 rpm. The extruder design was 20mm/20D.

The core layer stream and two outer layer streams were introduced into a feedblock to form a 3-layered melt stream. The feedblock was maintained at 130 degrees Celsius. It was set up as 25/50/25 plates. The 3-layered melt stream was introduced into a die to form the multilayered film. The die was set to 130 degrees Celsius. It had a dimension of 150 mm and die lip size ($\varepsilon$) of ca 0.6 mm. The film was then calendered at 30 degrees Celsius. The targeted films thickness was 400 $\mu$m and was adjusted by modifying the pulling speed of the calender.

Coextruded multilayer films were obtained, wherein the multilayer film containing the TPS/PBAT 50/50 wt% core layer was labelled as M and the multilayer film containing the TPS/PBAT/Joncryl® 50/50/0.1 wt% core layer was labelled as M-J.

On the edges of the multilayer film, a partial encapsulation of the core layer by the PBAT highly transparent cap was observed due to a lower viscosity compared to the core blend layer. This phenomenon has been previously reported and analysed (L. Avérous, "Multilayer Coextrusion of Starch/Biopolyester" in Biodegradable Polymer Blends and Composites from Renewable Sources, John Wiley & Sons Ltd., 2008, pp. 435-464) Thus, the edges of the multilayer films were cut to keep only their central part for subsequent analyses and characterizations.

Then thickness, elongation at break (EB%), Ultimate Tensile Strength (UTS (MPa) in machine direction (MD) and transverse direction (TD, also called cross direction (CD), was measured for the monolayer films and the three-layered films.

Results are given in Table 1 below.

| Materials | Thickness ($\mu$m) | Transverse direction (TD) | | | Machine direction (MD) | | |
|---|---|---|---|---|---|---|---|
| | | EB (%) | UTS (MPa) | samples (discarded) | EB (%) | UTS (MPa) | samples (discarded) |
| PBAT | 370 | 658 ± 20 | 13.7 ± 0.4 | 3(1) | 441 ± 50 | 18.9 ± 1.1 | 5 (0) |
| PBAT | 370 | 550 ± 20 | 13.0 ± 0.3 | 4(0) | 722 ± 75 | 15.7 ± 1.1 | 4(0) |
| PBAT\|TPS+PBAT 50/50\| PBAT | 430 | 47 ± 7 | 6.2 ± 0.3 | 5(1) | 117 ± 26 | 12.7 ± 0.9 | 5(3) |
| TPS+PBAT 50/50 | 460 | 15 ± 2 | 4.8 ± 0.2 | 6 (0) | 13 ± 2 | 9.2 ± 0.5 | 6 (2) |
| TPS+PBAT 50/50 | 230 | 3 ± 1 | 4.2 ± 0.6 | 6 (0) | 4 ± 1 | 6.2 ± 0.8 | 6(2) |
| PBAT\|TPS+PBAT 50/50\| PBAT | 420 | 24 ± 5 | 6.1 ± 0.2 | 6(2) | 14 ±4 | 9.3 ± 0.5 | 6(2) |

(continued)

|  | | Transverse direction (TD) | | | Machine direction (MD) | | |
|---|---|---|---|---|---|---|---|
| Materials | Thickness ($\mu$m) | EB (%) | UTS (MPa) | samples (discarded) | EB (%) | UTS (MPa) | samples (discarded) |
| TPS+PBAT/Joncryl 50/50/0.1 | 240 | 5 ± 1 | 5.0 ± 0.2 | 5(1) | 6 ± 1 | 7.3 ± 0.8 | 8 (2) |
| TPS+PBAT/Joncryl 50/50/0.1 | 450 | 24 ± 3 | 5.5 ± 0.2 | 5 (1) | 29 ± 3 | 10.0 ± 0.9 | 7(1) |
| PBATITPS+PBAT/Joncryl 50/50/0.1 \|PBAT | 530 | 37 ± 7 | 5.7 ± 0.2 | 6 (0) | 10 ± 1 | 6.5 ± 0.3 | 4(1) |
|  | | | | | | | |

5. Oxygen barrier properties

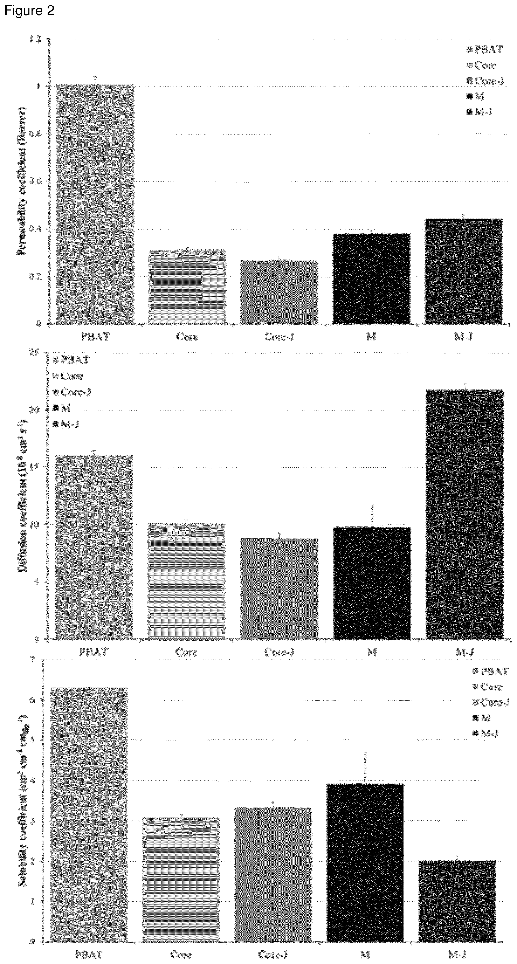

To assess the suitability of the coextruded multilayer films for packaging applications, permeability to oxygen was evaluated. For each tested film, the $O_2$ permeability coefficient was calculated, as well as its two main associated parameters, i. e. diffusion and solubility, as reported in Figure 2. As expected, TPS/PBAT blending strongly decreased the permeability to oxygen compared to neat PBAT. Unsurprisingly, the permeability to oxygen was slightly higher for multilayer films than for single core layers due to the presence of PBAT cap layers, more prone to oxygen permeation. Still, their permeability coefficients were lower than the one of neat PBAT, thus preserving the benefits of TPS incorporation and confirming the relevancy of such multiphase systems for packaging applications. However, it was surprising to observe that the diffusion coefficient of the M-J film was more than doubled compared to the other films and even higher than the one of neat PBAT film. Still, its permeation coefficient remained inferior to the one of PBAT and relatively similar to the one of the M film, which means that the increase of diffusivity was largely compensated by a strong solubility decrease. Overall, the O2 barrier properties of all multiphase systems were satisfying with all permeabilities being inferior to 0.5 Barrer.

6. Water vapor sorption

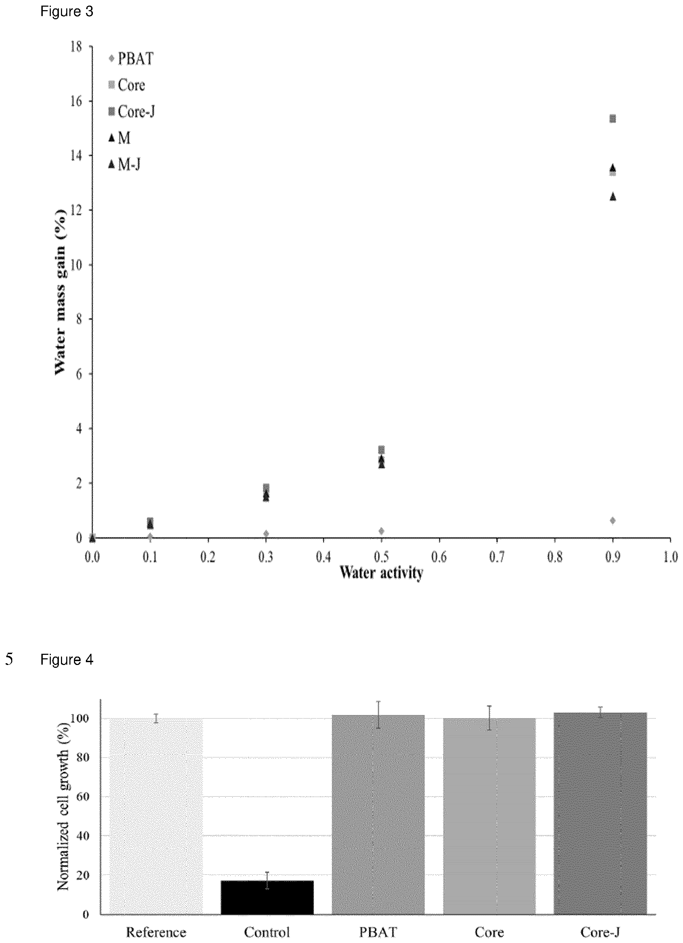

The water sorption behavior of extruded films was also investigated. For each film, the equilibrium water mass gain was measured at given water activities (0.0, 0.1, 0.3, 0.5 and 0.9) and the resulting water vapor sorption isotherms were plotted in Figure 3.

The relatively hydrophobic behavior of PBAT was first confirmed by its low water mass gain, which remained below 1% even at the highest water activity (0.9), due to its aromatic rings and low ester density. As for the single core layers and coextruded multilayers, the water mass gains were low and similar for all multiphase systems up to moderate water activity (0.5) and increased drastically for the highest water activity. The shape of the resulting water vapor sorption isotherms thus corresponds to the Flory-Huggins-type profile, also known as type III in the Brunauer-Emmett-Teller classification. This result is fully in line with the known water vapor sorption of carbohydrate-based systems. However, the water mass gains of the single core layers were significantly lower than other TPS/PBAT blends reported in literature, for all tested water activities. This excellent result indicates that the blends formulations and processing parameters were correctly chosen to minimize their water vapor affinity. Overall, the films were all reasonably resistant to water vapor at moderate water activities, which adequately simulate the ambient moisture in the context of potential packaging applications.

7. Cell culture growth assessment:

The cell compatibility of extruded films was assessed to evaluate their potential for biomedical applications. Extruded monolayer films of PBAT, Core and Core-J were tested in triplicates. The results are summarized in Figure 4. The reference was an empty borosilicate glass flask and the negative control was a 2% solution of DMSO. All three films allowed a full cell growth, as demonstrated by the relative cell growth percentage around 100% in all cases. No significant difference was obtained between the three tested films, which could all be considered as biocompatible, given the results of cell growth. These unequivocal results confirmed that Joncryl® is a suitable compatibilizer for applications requiring biocompatibility. However, the incubation of both films containing TPS (Core and Core-J) resulted in slightly brownish turbid solutions, caused by the TPS phase. This was not the case with the neat PBAT film, which yielded a perfectly clear and colorless solution. This difference in resistance to the extraction medium is an additional argument in favor of the design of multilayer films with external pure PBAT cap layers for applications involving liquid contact.

**Claims**

1. A biodegradable multilayered film comprising stacked to one another in the following order:

   a) a first outer layer comprising a first polymer selected from the group consisting of polybutylene adipate terephthalate (PBAT), poly butylene succinate (PBS), poly butylene succinate adipate (PBSA), and mixtures thereof,
   b) a core layer comprising a blend of a thermoplastic starch (TPS) and polybutylene terephthalate (PBAT),
   c) a second outer layer comprising a second polymer selected from the group consisting of polybutylene adipate terephthalate (PBAT), poly butylene succinate (PBS), poly butylene succinate adipate (PBSA), and mixtures thereof.

2. The biodegradable multilayered film according to claim 1, wherein the first outer layer and the core layer are in direct contact, and the second outer layer and the core layer are in direct contact.

3. The biodegradable multilayered film according to claim 1, wherein the multilayer film further comprises one or more tie layers between the first outer layer and the core layer, and between the second outer layer and the core layer.

4. The biodegradable multilayered film according to any one of claims 1 to 3, wherein the blend of a thermoplastic starch (TPS) and polybutylene terephthalate (PBAT) of the core layer comprises the TPS and PBAT in a weight ratio of from 60:40 to 40:60, preferably from 55: 45 to 45: 55, more preferably 50:50.

5. The biodegradable multilayered film according to any one of claims 1 to 4, wherein the thermoplastic starch (TPS) comprises a starch selected from the group consisting of corn starch, tapioca starch, cassava starch, wheat starch, native wheat starch, potato starch, rice starch, sorghum starch, seaweed starch and their mixtures, preferably native wheat starch.

6. The biodegradable multilayered film according to any one of claims 1 to 5, wherein the core layer further comprises a compatibilizer, such as a maleic anhydride grafted polyester, a polyvinylacetate, or a co-polymer comprising styrene monomers and epoxide functionalised (meth)acrylate or (meth)acrylic acid monomers.

7. The biodegradable multilayered film according to any one of claims 1 to 6, wherein the biodegradable multilayered film has a thickness of from 300 micrometers to 500 micrometers, preferably from 350 to 450 micrometers, more preferably from 380 to 420 micrometers.

8. The biodegradable multilayered film according to any one of claims 1 to 7, wherein the multilayered film has an elongation at break in machine direction (MD) of up to 200% and in cross direction (CD) of up to 100%.

9. The biodegradable multilayered film according to any one of claims 1 to 8, wherein the bio-based carbon content of said biodegradable multilayered film is at least 20 %.

10. The biodegradable multilayered film according to any one of claims 1 to 9, wherein said biodegradable multilayered film has a flex-durability lower than 10 pinholes as measured according to standard ASTM F392-A (2004) on a A4 sheet.

11. The biodegradable multilayered film according to any of claims 1 to 10, which is suitable for manufacturing a bag usable as a bioreactor.

12. A process for manufacturing the biodegradable multilayered film according to any one of claims 1 to 11, comprising the following steps:

    - introducing and melting the blend of a thermoplastic starch (TPS) and polybutylene terephthalate (PBAT) into a first extruder to form a core layer stream;
    - introducing and melting the first polymer into a second extruder to form a first outer layer stream;
    - introducing and melting the second polymer into a third extruder to form a second outer layer stream or alternatively, if first and second polymer are identical, connecting the second extruder with a feedblock to form a first outer layer stream and a second outer layer stream;
    - introducing the core layer stream, first outer layer stream and second outer layer stream into a feedblock to form a 3-layered melt stream;
- introducing the 3-layered melt stream into a die to form a multilayered film.

13. A biodegradable multilayered film obtained by the process according to claim 12.

14. A single-use bag whose wall comprises the multilayer film according to anyone of claims 1 to 11.

15. A bioreactor comprising the single-use bag according to claim 14.

16. A container suitable for mixing, packaging, storing or transporting biopharmaceuticals comprising the single-use bag according to claim 14.

Figure 1

| Length (mm) | 24 | 96 | | | 144 | | 96 | | | | 160 |
| Pitch (mm) | 8 | 8 | | | 8 | | 8 | | | | 8 |
| Number | | | 8 | 4 | | 6 | | 5 | 2 | 5 | |
| Thickness (mm) | | | 4 | 4 | | 4 | | 4 | 4 | 4 | |
| Stagger angle (°) | | | 90 | 60 | | 60 | | 90 | 60 | 30 | |

Kneading block – mixing

Kneading block – mixing

Kneading block – melting

Figure 2

Figure 3

Figure 4

Europäisches
Patentamt

European
Patent Office

Office européen
des brevets

**EUROPEAN SEARCH REPORT**

Application Number

EP 23 30 6146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/198282 A1 (GREAT WRAP PTY LTD [AU]) 29 September 2022 (2022-09-29) | 1-7,9, 12,13 | INV. B32B7/12 |
| A | * page 15, lines 3-12 *<br>* page 21, lines 15-23 *<br>* page 28, lines 1-8 *<br>* page 39, lines 16-20 *<br>* claims 1-8,11,18,26,28 *<br>* page 40; example 1 * | 8,10,11, 14-16 | B32B27/08 B32B27/36 C08L3/02 |
| X | WO 2023/031908 A1 (TIPA CORP LTD [IL]) 9 March 2023 (2023-03-09)<br>* page 2, lines 25-29 *<br>* page 7, lines 27-29 *<br>* page 9 *<br>* claims 1,4,11-14 *<br>* examples 1,7; table 1 * | 1-16 | |
| A | CN 114 434 929 A (SHANGHAI LELE PURE BIOTECHNOLOGY CO LTD) 6 May 2022 (2022-05-06)<br>* the whole document * | 1-16 | |
| | | | TECHNICAL FIELDS SEARCHED (IPC) |
| A | US 2023/060563 A1 (VAN LANDEGHEM ROBIN [BE]) 2 March 2023 (2023-03-02)<br>* the whole document * | 1-16 | B32B C09J C08L |

The present search report has been drawn up for all claims

| Place of search | Date of completion of the search | Examiner |
|---|---|---|
| The Hague | 26 November 2023 | Yu, Sze Man |

EPO FORM 1503 03.82 (P04C01)

## ANNEX TO THE EUROPEAN SEARCH REPORT
## ON EUROPEAN PATENT APPLICATION NO.

EP 23 30 6146

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2023

| Patent document cited in search report | Publication date | Patent family member(s) | Publication date |
|---|---|---|---|
| WO 2022198282 A1 | 29-09-2022 | AU 2022243069 A1<br>WO 2022198282 A1 | 19-10-2023<br>29-09-2022 |
| WO 2023031908 A1 | 09-03-2023 | NONE | |
| CN 114434929 A | 06-05-2022 | CN 114434929 A<br>WO 2023142684 A1 | 06-05-2022<br>03-08-2023 |
| US 2023060563 A1 | 02-03-2023 | EP 4217189 A1<br>US 2023060563 A1<br>WO 2023034188 A1 | 02-08-2023<br>02-03-2023<br>09-03-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MÉTAYER, M.** ; **LABBÉ, M.** ; **MARAIS, S.** ; **LANGEVIN, D.** ; **CHAPPEY, C.** ; **DREUX, F.** ; **BRAINVILLE, M.** ; **BELLIARD, P.** Diffusion of water through various polymer films: a new high performance method of characterization. *Polym. Test.*, 1999, vol. 18, 533-549

- **FOLLAIN et al.** Water Transport Properties of Bio-nanocomposites Reinforced by Luffa Cylindrica Cellulose Crystals. *J. Membr. Sci.*, 2013, vol. 427, 218-229
- Multilayer Coextrusion of Starch/Biopolyester. **L. AVÉROUS**. Biodegradable Polymer Blends and Composites from Renewable Sources. John Wiley & Sons Ltd., 2008, 435-464